Europäisches Patentamt

European Patent Office

Office européen des brevets

(11) Veröffentlichungsnummer: **0 287 081**
**A2**

## EUROPÄISCHE PATENTANMELDUNG

(21) Anmeldenummer: **88105904.2**

(22) Anmeldetag: **13.04.88**

(51) Int. Cl.4: **A23C 11/10 , A23L 1/20**

(30) Priorität: **16.04.87 DE 3713047**

(43) Veröffentlichungstag der Anmeldung:
**19.10.88 Patentblatt 88/42**

(84) Benannte Vertragsstaaten:
**AT BE CH DE ES FR GB GR IT LI LU NL SE**

(71) Anmelder: **Schöller Lebensmittel GmbH & Co. KG**
**Bucher Strasse 137**
**D-8500 Nürnberg 90(DE)**

(72) Erfinder: **Selck, Klaus-Willi**
**Sandweg 13**
**D-3110 Uelzen 5(DE)**
Erfinder: **Schmidt, Ernst-Heinrich**
**Hof Darzau**
**D-3139 Neu-Darchow(DE)**

(74) Vertreter: **Körber, Wolfhart, Dr. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Steinsdorfstrasse 10**
**D-8000 München 22(DE)**

(54) **Verfahren zur Herstellung einer faserstoffhaltigen Sojamilch sowie eines homogenen Faserstoffkonzentrats aus Sojabohnen.**

(57) Die vorliegende Erfindung liegt auf dem Gebiet der Herstellung einer faserstoffangereicherten Sojamilch sowie eines homogenen Faserstoffkonzentrats aus Sojabohnen. Die Aufarbeitung von Sojabohnen ist schon auf verschiedenen Wegen durchgeführt worden. Ein solches Verfahren sieht vor, bei der Zerkleinerung ein Ansteigen des pH-Wertes in der Suspension zu vermeiden und diesen im Bereich von 6,6 bis 7 zu halten. Demgegenüber wurde nun gefunden, daß es gelingt, eine glatte, vollmundige Textur in der Sojamilch wie folgt zu erreichen. Die Sojabohnen werden in eine vorbereitete erwärmte alkalische wässerige Lösung zudosiert (bevorzugtes Gewichtsverhältnis 1 : 4 bis 10) und im unmittelbaren Anschluß daran das erwärmte Gut zu einem Slurry vermahlen. Nach der Feinzerkleinerung erfolgt ein Erhitzen der erhaltenen Dispersion auf indirektem Wege auf 120 bis 150°C. Alsdann wird entspannt und bei leichtem Vakuum entgast, mittels einer Genußsäure neutral gestellt und über einen Separator Sojamilch und Feststoffe getrennt.

## Verfahren zur Herstellung einer faserstoffhaltigen Sojamilch sowie eines homogenen Faserstoffkonzentrats aus Sojabohnen

Die vorliegende Erfindung betrifft die Herstellung von faserstoffhaltiger Sojamilch und eines homogenen Faserstoffkonzentrats aus Sojabohnen.

Die dabei einzuhaltenden Merkmale ergeben sich aus der vorstehenden Anspruchsfassung.

Für den menschlichen Verzehr vorgesehene Sojaprodukte hat man schon nach diversen Verfahren hergestellt. Dabei wurde ein wesentliches Augenmerk u.a. auf die Entfernung des bitteren Geschmacks und die Erzielung einer für den Geschmack wesentlichen Teilchengröße gelegt. Ein bekanntes Verfahren, gemäß welchem Getränkegrundstoffe hergestellt werden sollen, sieht vor, ganze Bohnen einzuweichen, die Lipoxidase durch Erhitzen zu inaktivieren, die Bohnen zur Hautablösung zu brechen und nach der Abschwämmung der Häute die Bohnen in Gegenwart von Wasser zu zerkleinern; die erhaltene wäßrige Suspension wird unter Druck homogenisiert. Von gewissem Nachteil ist dabei jedoch das Einweichen vor dem Erhitzen, nachdem dabei die Lipoxidase auf die Fette in Richtung auf die Bildung von Bitterstoffen wirken kann.

Ein anderes bekanntes Verfahren zur Herstellung von Sojamilchkonzentrat sieht vor, die in kaltes Wasser eingeweichten nichtgeschälten Bohnen dadurch von der Bitterkeit zu entfernen, daß sie durch ein heißes und dann durch ein kaltes Bad geführt werden. Die weitere Aufarbeitung erfolgt derart, daß man die Bohnen zerkleinert, die wäßrige Dispersion auf 120°C erhitzt und nach dem Desodorieren im Vakuum die unlöslichen Bestandteile entfernt. Nach Zugabe von Zucker wird dann sterilisiert und konzentriert. Der Zuckerzusatz läßt jedoch darauf schließen, daß die Entfernung der Bitterkeit nicht zufriedenstellend verläuft.

Nach einem anderen bekannten Vorschlag (DE-PS 27 45 221) werden die Bohnen in Gegenwart von Wasser bei einer Temperatur von 90 bis 100°C zu einer Dispersion der Teilchen in der Größenordnung von 100 bis 500 μm zerkleinert; nach dem Erhitzen der Dispersion auf 120 bis 160°C durch Einspritzen von Dampf erfolgt eine zweite Zerkleinerung unter Bildung einer Suspension mit Protein-und Fettkorpuskeln mit Abmessungen in der Größenordnung von 2 bis 10 μm und Zellenhautbruchstücken mit einer Maxiamalabmessung von 40 bis 300 μm. Man kann dabei die Bohnen vorab noch einer Blanchierbehandlung unterwerfen. Wesentlich ist jedoch nach der Beschreibung zu beachten, daß der pH-Wert der Suspension, der im Zuge der Zerkleinerung leicht ansteigt, zwischen 6,6 und 7 bleibt. Diese pH-Einstellung ergibt sich auch übereinstimmend aus den Beispielen.

Demgegenüber wurde nun gefunden, daß eine Naßvermahlung in z.B. schwach alkalischer Natriumbicarbonat-Lösung von großem Vorteil für die Eigenschaften des zu gewinnenden Sojaproduktes ist.

Erfindungsgemäß geht man dabei so vor, daß in eine vorbereitete alkalische Lösung in Wasser von Trinkqualität, z.B. 0,4 bis 0,6 %ige Natriumbicarbonat-oder NaOH-Lösung, bei einer Temperatur von 90 bis 100 °C die Sojabohnen zudosiert werden, und zwar in einem vorzugsweisen Verhältnis von 1 Gewichtsteil Sojabohnen : 4-10 Gewichtsteilen Wasser, insbesondere von 1 : 5 bis 7. Unmittelbar danach wird das erwärmte Gut zu einem Slurry zur Erzielung einer Dispersion vermahlen. Hierfür eignen sich übliche Zerkleinerungsverfahren mittels Hammermühle, Lochscheibenmühle oder Zahnkolloidmühle. die einstufig oder auch zweistufig ausgeführt werden können. Die Temperatur vom Slurry beträgt vorteilhaft 85 bis 95°C, der pH-Wert der Dispersion etwa 7,2 bis 8,5, besonders 7,4 bis 7,8. Die erhaltene Dispersion wird alsdann auf indirektem Wege mittels überhitztem Wasser weiter auf 120 bis 150°C erhitzt. Nach einer Heißhaltung von 20 bis 180 s, vorzugsweise von 60 bis 120 s, erfolgt eine Entspannung und Entgasung. Letztere wird bei leichtem Unterdruck von -0,8 bis -0,62 bar entsprechend einer Temperatur von 60 bis 75°C durchgeführt. In einer besonders bevorzugten Ausführungsform des Verfahrens werden 5 bis 15 Gew.-% des entgasten Produkts nach Kühlung wieder in das Vakuumentspannungsgefäß zurückgeführt. was eine vorteilhafte Auswirkung auf den Entgasungseffekt hat. Anschließend wird mittels einer Genußsäure, wie Zitronensäure oder deren Salz, eine Neutralstellung auf pH 7 (bezogen auf 0 bis 20°C) vorgenommen und nach Einstellung des Gehalts an Trockenmasse homogenisiert. Diese Homogenisierung kann erfindungsgemäß auch bereits vor der Erhitzung auf 120 bis 150°C erfolgen.

Durch Abtrennung der Feststoffe (Okara), vorzugsweise mittels Klärseparator oder Filter, werden dann nach entsprechender Kühlung die Sojamilch einerseits sowie die Feststoffe andererseits gewonnen. Die Steuerung des Klärprozesses erfolgt erfindungsgemäß so, daß etwa 3 bis 30 Vol.-% sedimentierbare Anteile in der Sojamilch verbleiben. da auf diese Weise eine glatte, vollmundige Textur in der Sojamilch erreicht wird.

Die erhaltene Sojamilch ist frei von Lipoxydase, Lipase, Urease, Peroxydase. Der Trypsininhibitor ist zu 80 bis 95 % inaktiviert. Die Öltröpfchen und Eiweißpartikel sind kleiner als 1 μm. Die in der Sojamilch noch enthaltenen Faserbestandteile haben eine maximale Teilchengröße von 10 μm, wodurch die Textur im Vergleich zu einem nicht filtrierten oder nicht separierten Produkt erheblich verbessert wird.

Die abgetrennten Feststoffe können - soweit sie nicht anderweitig Verwendung finden sollen - nach einer Feinstzermahlung der geklärten Sojamilch zugeführt werden, um so in vorteilhafter Weise eine faserstoffangereicherte Sojamilch zu erhalten. Die Zusatzmengen sind in gewissem Umfang von den Bearbeitungsschritten abhängig. So kann z.B. nach Feinstzerkleinerung der Feststoffe, vorzugsweise mittels Kugelmühle, die Zudosierung zur geklärten Sojamilch in Mengen von 5 bis 50 % erfolgen. Werden dagegen die Faserstoffe durch Gefrieren in ihrer Wasserbindungsfähigkeit herabgesetzt, so wird es dadurch ermöglicht, bei gleicher Viskosität im Endprodukt eine Zudosierung der feinstzerkleinerten Produkte in Mengen bis zu 70 % vorzunehmen. Man kann auch so vorgehen, daß man zunächst eine Einstellung des pH-Wertes im Faserstoffkonzentrat auf 4-6 mittels einer Genußsäure vornimmt, dann einen enzymatischen Aufschluß der Faserstoffe mittels geeigneter Enzyme, vorzugsweise Cellulase (EC 3.2.1.4) oder einem Gemisch von Cellulasen, Hemicellulasen und Pectinasen durchführt, woraufhin eine Feinstzerkleinerung mit anschließender Enzyminaktivierung durch Erhitzen sowie eine Zudosierung zur geklärten Sojamilch in Mengen von z.B. 1 bis 30 % erfolgt. Eine Abwandlung des letzteren Weges ist insofern möglich, als sich der pH-Einstellung mittels Genußsäure im Faserstoffkonzentrat auf ca. 6,5 die Durchführung einer Fermentation mit Milchsäurebakterienkulturen, vorzugsweise Sc. thermophilus und Lb. bulgaricus, ggf. auch in Kombination mit dem enzymatischen Aufschluß, anschließt.

Beispiel 1:

Eine vorbereitete 0,4 %ige, heiße Natriumbicarbonatlösung wird im Verhältnis 7:1 mit ganzen, ungeschälten Sojabohnen gemischt und im unmittelbaren Anschluß daran zunächst mittels einer Lochscheibenmühle grob vermahlen und dann mittels einer Zahnkolloidmühle zu einer Dispersion feinzerkleinert. Diese Dispersion wird nach einer Heißhaltezeit von ca. 20 s in einem Plattenwärmeaustauscher auf ca. 137°C erhitzt und dann für ca. 80 s heißgehalten. Durch den pH-Wert von 7,4 bis 7,8 (gemessen bei ca. 85°C) im Slurry ergeben sich besonders vorteilhafte Bedingungen für die Enzyminaktivierung, da die Proteindenaturierung bei dieser Hitzebelastung vergleichsweise gering ist und damit zu einer hohen Proteinlöslichkeit in der Sojamilch führt. Das überhitzte Produkt wird über ein Druckhalteventil in ein auf einem Unterdruck gehaltenes Entgasungsgefäß eingebracht und dabei von einem Druck von etwa 3 bar unter Entgasung auf etwa 75°C abgekühlt. Durch Zudosierung einer Zitronensäurelösung wird der pH-Wert neutral gestellt und dann in einem Hochdruckhomogenisator bei etwa 350 bar homogenisiert. Im Anschluß daran erfolgt eine Separierung der Feststoffe im Sinne einer Fraktionierung, da sich alle Teilchen größer 10 μm im Faserstoffkonzentrat befinden. Die geklärte Sojamilch weist einen Sedimentgehalt von etwa 10 % auf. Die Ausbeute des Verfahrens beträgt 75 %. Als Ausbeute wird der Erhalt an Gewicht Trockenmasse in der Sojamilch im Verhältnis zum eingesetzten Gewicht an Trockenmasse bezeichnet.

Nach entsprechender Kühlung in einem Plattenwärmeaustauscher bzw. Schabewärmeaustauscher werden die Sojamilch einerseits sowie die Feststoffe andererseits gewonnen.

Beispiel 2:

Eine vorbereitete 0,4 %ige, heiße Natriumbicarbonatlösung wird im Verhältnis 7:1 mit ganzen, ungeschälten Sojabohnen gemischt und im unmittelbaren Anschluß, wie im Beispiel 1 beschrieben, vermahlen, erhitzt, durch Entspannungskühlung entgast, neutralisiert und homogenisiert, im Anschluß daran gekühlt. Es erfolgt eine analytische und sensorische Beurteilung von Sojasuspensionen, die wie beschrieben hergestellt worden sind und sich durch die Temperatur zwischen Mahlen und Enzyminaktivierung (kurz: Mahltemperatur) unterscheiden:

3

|  | Mahltemp. 85 °C | Mahltemp. 88 °C | Mahltemp. 90 °C |
|---|---|---|---|
| Lipase/Lipoxydase | neg. | neg. | neg. |
| Urease (mg N/g) | 0,042 | 0,02 | 0,019 |
| Trypsininhibitor (TIU/g) | 500 | 510 | 402 |
| Trockenmasse (%) | 11,3 | 11,3 | 11,3 |
| Geruch | - | 0 | ++ |
| Geschmack | - | . 0 | ++ |

Bewertung:  −  schlecht

0  befriedigend

+  gut

++ sehr gut

Die mit einer Mahltemperatur von 90°C hergestellte Sojasuspension wird nach Zwischenlagerung auf ca. 80°C erhitzt und mittels eines Klärseparators in eine Sojamilch sowie in ein Faserstoffkonzentrat, wie in Beispiel 1 beschrieben, aufgeteilt.

Beispiel 3:

Soja-Slurry wird, wie in Beispiel 1 beschrieben, hergestellt. Die Dispersion wird dann einer Hitzebehandlung mit einem F-Wert von 18,7 (137°C für 65 s) unterzogen und weiter in der beschriebenen Weise entgast, homogenisiert und separiert. Nach Kühlung erhält man eine Sojamilch, die eine Trypsininhibitoraktivität von 470 TIU/g aufweist. Der Trypsininhibitor ist damit zu 92,5 % inaktiviert.

Beispiel 4:

Die Konzentration der Natriumbicarbonatlösung wird auf 0,54 % erhöht und ein Slurry wie in Beispiel 1 hergestellt. Die Dispersion wird dann einer Hitzebehandlung mit einem F-Wert von 7,6 (137°C für 27 s) unterzogen und weiter in der beschriebenen Weise entgast, homogenisiert und separiert. Nach Kühlung erhält man eine Sojamilch, die eine Trypsininhibitoraktivität von 496 TIU/g aufweist. Der Trypsininhibitor ist damit zu 92,0 % inaktiviert. Man kann damit durch leichte Erhöhung der Natriumbicarbonatkonzentration bei verringerter Hitzebelastung (bedeutet geringere Proteindenaturierung) eine äquivalente Trypsininhibitorinaktivierung erreichen.

Beispiel 5:

Es wird eine Sojadispersion, wie in Beispiel 1 beschrieben, hergestellt und nach Neutralisierung mit unterschiedlichen Drücken homogenisiert. Die hergestellten Suspensionen werden mittels Dekanter bzw. Separator geklärt. Dabei zeigte sich folgendes Klärverhalten:

< 50 bar: weder mit Dekanter noch mit Separator befriedigende Trennung
50 - 150 bar: Trennung mit Separator möglich; allerdings hoher Feststoffanteil und damit geringere Ausbeute

150 - 350 bar: günstiger Bereich, es fällt ein homogener Feststoff an

> 350 bar: erforderliche Tellerfläche zur Klärung mittels Separator wird zunehmend größer und damit das Verfahren unwirtschaftlicher

## Ansprüche

1. Verfahren zur Herstellung einer faserstoffhaltigen Sojamilch sowie eines homogenen Faserstoffkonzentrats aus Sojabohnen, dadurch gekennzeichnet, daß man Sojabohnen in eine vorbereitete erwärmte alkalische wässerige Lösung zudosiert, im unmittelbaren Anschluß daran das erwärmte Gut zu einem Slurry vermahlt und dann feinzerkleinert, die erhaltene Dispersion auf indirektem Wege auf 120 bis 150°C erhitzt, dann entspannt und bei leichtem Vakuum entgast, mittels einer Genußsäure neutral stellt und über einen Separator die Sojamilch sowie die Feststoffe abtrennt.

2. Verfahren nach Anspruch 1, dadurch gekennzeichnet, daß die Zudosierung der Bohnen in einem Verhältnis von 1 Gew.-Teil zu 4 bis 10Gew.-Teilen Wasser erfolgt.

3. Verfahren nach Anspruch 1, dadurch gekennzeichnet, daß die Temperatur vom Slurry 85 bis 95°C, vorzugsweise 90°C beträgt.

4. Verfahren nach Anspruch 1, dadurch gekennzeichnet, daß die Heißhaltung vor der Entspannung 20 bis 110 s, vorzugsweise 80 s beträgt.

5. Verfahren nach Anspruch 1, dadurch gekennzeichnet, daß die Feststoffe nach einer Feinstzermahlung der geklärten Sojamilch in Mengen bis zu 70 % wieder zugeführt werden.

6. Verfahren nach Anspruch 1, dadurch gekennzeichnet, daß die Abtrennung im Separator bei einem Druck zwischen 150 bis 350 bar erfolgt.